# EUROPEAN PATENT SPECIFICATION

(11) **EP 0 495 051 B1**
(45) Date of publication and mention of the grant of the patent: **26.04.1995**
(21) Application number: 91914145.7
(22) Date of filing: 01.08.1991
(51) Int. Cl.: B65G 17/08

(54) **EQUIPMENT FOR CONTINUOUSLY MOVING HEAVY LOADS**
AUSRÜSTUNG ZUR KONTINUIERLICHEN BEWEGUNG SCHWERER LASTEN
MATERIEL POUR LE TRANSPORT EN CONTINU DE CHARGES LOURDES

(30) Priority: 02.08.1990 IT 31190
(43) Date of publication of application: 22.07.1992
(73) Proprietor: CENTRO SVILUPPO MATERIALI S.p.A., I-00129 Roma (IT)
(72) Inventor: REIS, Gianluigi, I-20122 Milano (IT); MASSOCCO, Giorgio, I-15033 Casal Monteferrato (IT)
(74) Representative: Gervasi, Gemma, Dr.
(86) International application number: PCT/IT91/00069
(87) International publication number: WO 92/02440

(56) References cited:
- AT-B- 364 787
- DE-A- 2 045 028
- US-A- 1 507 832
- US-A- 2 430 720

## Description

The present invention refers to equipment which can resolve the problems inherent in moving heavy loads on predetermined lines or routes, above all in environments which are not easily accessible and/or in places where for geometric or other reasons there is no traditional equipment for moving heavy loads such as roller tracks, cranes, gantry cranes, plateforms, etc.

In particular, the equipment in question allows the loading of loads with a specific pressure of up to 100,000 kg/m² with reduced vertical and transversal dimensions and is able to ensure a perfectly levelled and linear transport since the load is always positioned on the same unitary elements which provide for the movement of the load.

This equipment is suited for use in steelworks, quarries, foundries, automatic warehouses with heavy weights, as well as for all those applications which require a high specific pressure such as compactors, etc.

The system described below therefore develops a solution to the problem of continuously moving loads with a specific pressure of up to 100,000 kg/m² in environments and sites which are not easily accessible and/or which either do not have available or cannot house other means of transport whatever they may be.

Load moving equipments comprising a support structure supporting horizontal sliding means, a traction cog-wheel, a return cog-wheel and a series of base units, equal to each other, which are hinged to each other to realise a closed chain moved by the traction cog-wheel and tensioned by the return cog-wheel are known in the art.

DE-A-2,045,028 describes a conveyor according to the preamble of claim 1, wherein two adjacent base units (panels) are hinged to each other by tie rods passing through hinge lugs belonging to two adjacent panels: to each tie rod a support wheel rolling on the horizontal sliding means is also fixed.

As the hinge which links two adjacent panels to each other coincides with the axis of the support wheel, when the panels are loaded they bend, hinge lugs of the adjacent panels move away from each other, turning round the relevant tie rod and no continuous plane supporting a load can be realised through the conveyor described by DE-A-2,045,028, which is therefore not suitable for moving heavy loads.

The present invention refers to equipment for the continuous moving of heavy loads according to claim 1.

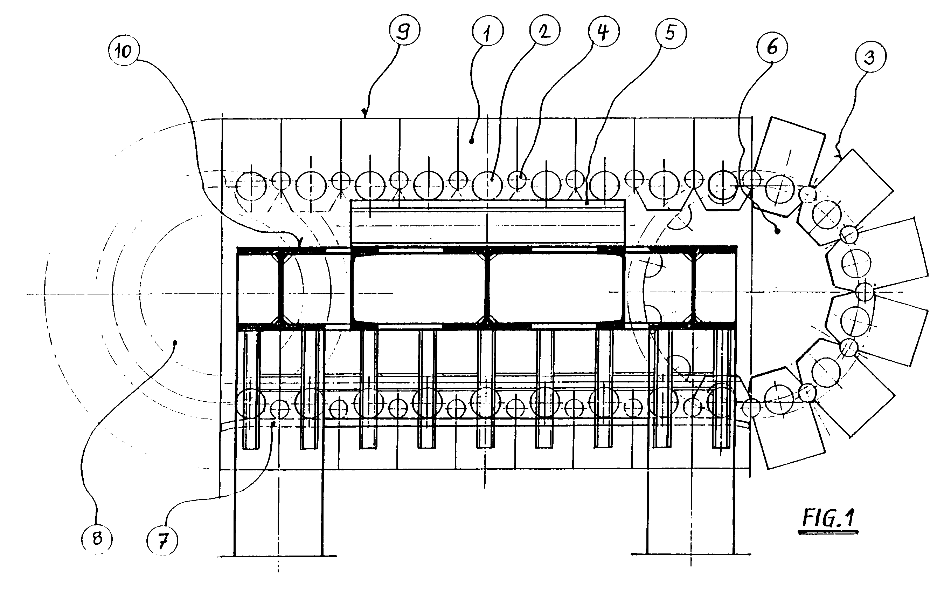

The main components of the equipment, whose description and working is given below, are shown in fig. 1. More specifically:
- the weight, with a specific pressure of up to 100,000 kg/m², is loaded on the loading plane. This plane consists of a series of base units 1, all equal to each other, adjacent to each other and hinged to each other by means of the linking hinges 4 and fitted with moving wheels 2.
   The mutual interaction between the lateral sides 3 of two adjacent base unit 1 allows the balance of the base units 1 with the load perfectly horizontal on the loading plane. The dimensions of the base units 1 are in any case such as to sustain and move the specific loads of up to 100,000 kg/m².
- The moving mechanism, comprising the cog-wheels 6 and 8, as well as the hinges 4 linking the base units 1 allows, by means of the slotting of the moving wheels 2 in the spaces of the cog-wheels 6 and 8, the movement of the base units 1.
- The stress transfer to the support structure, constituted by the elements 5, 7 and 10, guarantees the mutual interaction between adjacent base units 1 and the moving of the heavy load on the loading plane without notable deformation of the whole structure.
- When the entire structure moves, the base units 1, linked to each other by the hinges 4, are unable to rotate one against the other during straight horizontal movement due to the mutual interaction between lateral sides 3, while, on the other hand, they are able to rotate, with an opposing direction of rotation and momentary centre of rotation which coincides with the axis of the hinge 4 so as to "open" the loading place during the rotation of the cog-wheels 6 and 8 in whose slots the moving wheels 2 of the base units 1 themselves are inserted.

### TYPOLOGY OF THE OVERALL UNIT

The equipment is mainly constructed from steel and is installed, in the standard model, in a special metal structure which is robust and reliable, with all the working equipment, alarm and safety devices.
The description above does not indicate in detail the motor devices as well as the auxiliary functional items such as the ways, joints, transmission, etc., since they are considered of no relevance and secondary for the purpose of describing the functioning of the equipment which is the subject of the present invention.
It is obvious that the invention is not limited to the embodiment described and illustrated, but that numerous variations and further improvements can be made without going out from the scope of the appended claims.

### LIST OF THE MAIN COMPONENTS

1 - Base unit
2 - Moving wheel
3 - Lateral side of a base unit 1
4 - Hinge
5 - Horizontal sliding means
6 - Traction cog-wheel
7 - Chain return runner
8 - Return cog-wheel
9 - Horizontal side of a base unit 1
10- Support structure

## Claims

1. Equipment for the continuous moving of heavy loads comprising a support structure (10) supporting horizontal sliding means (5), a traction cog-wheel (6), a return cog-wheel (8) and a series of base units (1) linked to each other to realise a closed chain moved by said traction cog-wheel (6) and tensioned by said return cog-wheel (8), moving wheels (2) of said base units (1) being engaged within slots of said traction and return cog-wheels (6, 8), each of said base units (1), equal to each other and symmetrically shaped, comprising a horizontal side (9) supporting said load and two lateral sides (3) whose first edges are connected to the opposite edges of said horizontal side (9), characterised in that the second edges of the lateral sides (3) are connected to each other through connecting means each fitted with a moving wheel (2) which is rolling on said sliding means (5) and is located substantially midway between said second edges, second edges of two lateral sides (3) belonging to two adjacent base units (1) being connected to each other by a hinge (4), such that the lateral sides of two adjacent base units (1), when moving on said sliding means (5), are pressed together by said load supported by their horizontal sides (9).

2. Equipment as claimed in claim 1, characterised in that each of said base units (1) is symmetrical with the axis of the relevant moving wheel (2).

3. Equipment as claimed in claim 1 characterised in that said support structure (10) further comprises a chain return runner (7), with the moving wheels (2) of said basic units (1) belonging to the lower branch of said closed chain rolling on said chain return runner (7).

## Patentansprüche

1. Ausrüstung zum kontinuierlichen Bewegen von schweren Lasten, umfassend eine horizontale Gleiteinrichtungen (5) tragende Traganordnung (10), ein Zug-Zahnrad (6), ein Rücklauf-Zahnrad (8), und eine Reihe von Tragsegmenten (1), die miteinander verbunden sind, um ein von dem Zug-Zahnrad (6) angetriebenes und durch das Rücklauf-Zahnrad (8) gespanntes, geschlossenes Zugkraftorgan zu bilden, im Eingriff mit Aussparungen des Zug-Zahnrades (6) und des Rücklauf-Zahnrades (6) befindliche Laufräder (2), jedes der gleichartig und symmetrisch ausgebildeten Tragsegmente (1) umfassend eine horizontale Seite (9), die die Last trägt, und Seitenflächen (3), deren erste Kanten mit den gegenüberliegenden Kanten der horizontalen Seiten (9) verbunden sind,
**dadurch gekennzeichnet**, daß
die zweiten Kanten der Seitenflächen (3) durch Verbindungseinrichtungen miteinander verbunden sind, jede der Verbindungseinrichtungen mit einem Laufrad (2) ausgestattet ist, das auf der Gleiteinrichtung (5) rollt und sich im wesentlichen mittig zwischen den zwei Kanten befindet, und die zweiten Kanten zwei benachbarten Tragsegmenten (1) zugeordnet sind, die durch ein Gelenk (4) auf solch eine Art und Weise miteinander verbunden sind, daß die Seitenflächen (3) zweier benachbarter Tragsegmente (1) durch die von ihren horizontalen Seiten (9) getragene Last aneinandergepreßt werden, wenn sich die Tragsegmente (1) auf der Gleiteinrichtung (5) bewegen.

2. Ausrüstung nach Anspruch 1,
**dadurch gekennzeichnet**, daß
jedes der Tragsegmente (1) symmetrisch zu der Achse der entsprechenden Laufräder (2) angeordnet ist.

3. Ausrüstung nach Anspruch 1,
**dadurch gekennzeichnet**, daß
die Traganordnung (10) des weiteren eine Zugkraftorgan-Rücklaufschiene (7) umfaßt, wobei die Laufräder (2) des unteren Abschnitts des geschlossenen Zugkraftorgans auf der Rücklaufschiene (7) rollen.

## Revendications

1. Equipement pour le transport en continu de charges lourdes, comprenant une structure de support (10) supportant des moyens de coulissement horizontal (5), une roue d'engrènement de traction (6), une roue d'engrènement de renvoi (8) et une série d'unités de base (1) reliées l'une à l'autre afin de réaliser une chaîne fermée déplacée par ladite roue d'engrènement de traction (6) et mise en traction par ladite roue d'engrènement de renvoi (8), des roues de déplacement (2) desdites unités de base (1) étant engagées dans des logements en forme de rainures desdites roues d'engrènement de traction et de renvoi (6, 8), chacune desdites unités de base (1), égale aux autres et de forme symétrique, comprenant une face horizontale (9) supportant ladite charge et deux faces latérales (3) dont des premiers bords sont reliés aux bords opposés de ladite face horizontale (9), caractérisé en ce que les deuxièmes bords des faces latérales (3) sont reliés l'un à l'autre par des moyens de liaison équipés chacun d'une roue de déplacement (2) qui roule sur lesdits moyens de coulissement (5) et qui est située sensiblement à mi-distance entre lesdits deuxièmes bords, les deuxièmes bords de deux faces latérales (3) appartenant à deux unités de base adjacentes (1) étant reliés l'un à l'autre par une articulation à charnière (4) de telle façon que les faces latérales de deux unités de base adjacentes (1), lorsqu'elles se déplacent sur lesdits moyens de coulissement soient (5) pressées l'une contre l'autre par ladite charge supportée par leurs faces horizontales (9).

2. Equipement selon la revendication 1, caractérisé en ce que chacune desdites unités de base (1) est symétrique par rapport à l'axe de la roue de déplacement correspondante (2).

3. Equipement selon la revendication 1, caractérisé en ce que ladite structure de support (10) comporte en outre un chemin de guidage de retour de chaîne (7), les roues de déplacement (2) desdites unités de base (1) appartenant à la branche inférieure de ladite chaîne fermée roulant sur ledit chemin de guidage de retour de chaîne (7).
